# EUROPÄISCHE PATENTANMELDUNG

(11) **EP 3 444 637 A1**
(43) Veröffentlichungstag der Anmeldung: **20.02.2019**
(21) Anmeldenummer: 18188806.6
(22) Anmeldetag: 14.08.2018
(51) Int. Cl.: G01S 19/48, B60W 30/06, G05D 1/02, G08G 1/14, G01S 19/42

(54) **VERFAHREN ZUM BETREIBEN EINES KRAFTFAHRZEUGS IN EINER UMGEBUNG MIT BESCHRÄNKTEM ZUGRIFF AUF EIN NAVIGATIONSSATELLITENSYSTEM, FAHRERASSISTENZSYSTEM SOWIE KRAFTFAHRZEUG**

(30) Priorität: 17.08.2017 DE 102017118741
(71) Anmelder: Valeo Schalter und Sensoren GmbH, 74321 Bietigheim-Bissingen (DE)
(72) Erfinder: Sattler, Stefanie, 74321 Bietigheim-Bissingen (DE); Tzempetzis, Dimitrios, 74321 Bietigheim-Bissingen (DE)

(57) **Zusammenfassung**

Die Erfindung betrifft ein Verfahren zum Betreiben eines Kraftfahrzeugs (1, 1') in zumindest einem semi-autonomen Fahrbetrieb in einem Umgebungsbereich (8a) des Kraftfahrzeugs, in dem ein zumindest beschränkter Zugriff auf zumindest eine Positionsinformation (15) für das Kraftfahrzeug, die mit einem globalen Navigationssatellitensystem erfasst wird, vorliegt, mit den Schritten:
Erfassen zumindest einer Positionsinformation des Kraftfahrzeugs außerhalb des Umgebungsbereichs mittels einer Erfassungseinrichtung (11) des globalen Navigationssatellitensystems, wenn sich das Kraftfahrzeug außerhalb des Umgebungsbereichs befindet;
Speichern dieser außerhalb des Umgebungsbereichs erfassten Positionsinformation des Kraftfahrzeugs auf einem Speichermedium;
Erfassen von zumindest einem fahrdynamischen Parameter des Kraftfahrzeugs mittels zumindest einer Erfassungseinrichtung des Kraftfahrzeugs;
Bestimmen der aktuellen Position (15') des Kraftfahrzeugs im Umgebungsbereich abhängig von der zumindest einen abgespeicherten Positionsinformation des Kraftfahrzeugs außerhalb des Umgebungsbereichs und abhängig von dem zumindest einem erfassten fahrdynamischen Parameter; und
Fortbewegen des Kraftfahrzeugs im zumindest semi-autonomen Fahrbetrieb im Umgebungsbereich mit zumindest beschränkten Zugriff auf die Positionsinformation des globalen Navigationssatellitensystems in Abhängigkeit der bestimmten aktuellen Position.

## Beschreibung

Die Erfindung betrifft ein Verfahren zum Betreiben eines Kraftfahrzeugs in zumindest einem semi-autonomen Fahrbetrieb in einem Umgebungsbereich des Kraftfahrzeugs. Im Umgebungsbereich herrscht zumindest ein beschränkter Zugriff auf zumindest eine Positionsinformation für das Kraftfahrzeug, die mit einem globalen Navigationssatellitensystems erfasst wird.

Es sind bereits Parkassistenzsysteme bekannt, welche ein trainiertes Parken ermöglichen. Insbesondere fährt dabei ein Fahrer des Kraftfahrzeugs ein beliebiges Manöver, beispielsweise eine Einfahrt auf einem Grundstück und ein anschließendes Einparken in eine Garage. Der zurückgelegte Weg wird als Trajektorie vom Parkassistenzsystem erkannt und abgespeichert. Sobald das Kraftfahrzeug sich wieder in der Nähe der gespeicherten Trajektorie befindet kann das Kraftfahrzeug zumindest semi-autonom die Trajektorie abfahren. Insbesondere wird zum Abfahren der Trajektorie die Position des Kraftfahrzeug mittels des globalen Navigationssatellitensystems, insbesondere mittels GPS (Global Positioning System), bestimmt. Insbesondere wird diese Position verwendet, um zu bestimmen, ob sich das Kraftfahrzeug in der Nähe der Trajektorie befindet. Erst nach dieser Bereichslokalisierung findet dann eine genaue Lokalisierung mittels weiterer Lokalisierungsalgorithmen, beispielsweise SLAM (Self Localisation and Mapping) statt, um die genaue Position in Bezug auf die gespeicherte Trajektorie zu bestimmen und diese abzufahren. Da insbesondere aber eine Positionsinformation von einem globalen Navigationssatellitensystem nicht überall abrufbar ist, beispielsweise in Städten mit hohen Häusern, in Parkhäusern oder Tunneln, findet insbesondere dort keine Bereichslokalisierung statt und die Trajektorie, insbesondere eine Startposition der Trajektorie, kann dadurch nicht aufgefunden werden.

Die DE 10 2014 002 150 B3 offenbart ein Verfahren zur Ermittlung der absoluten Position einer mobilen Einheit. Die mobile Einheit weist zumindest einen optischen, einen Erfassungsbereich des Umfelds der mobilen Einheit aufnehmenden Umgebungssensor, auf. Es wird in einer vorbestimmten Navigationsumgebung, wobei optische, von Umgebungssensor erfassbare, unterscheidbare Marker in der Navigationsumgebung verwendet werden, welchen jeweils eine aus einem Kartendatensatz abrufbare absolute Position zugeordnet ist, wobei zur Positionsbestimmung wenigstens ein Marker in von wenigstens einem des wenigstens ein Umgebungssensor aufgenommen Sensordaten mittels eines Bildverarbeitungsalgorithmus detektiert und identifiziert wird. Unter Berücksichtigung der Position des Markers in den Sensordaten wird eine relative Position zwischen der mobilen Einheit und dem Marker ermittelt. Eine absolute Position der mobilen Einheit wird in Abhängigkeit von der relativen Position und der absoluten Position des Markers ermittelt, wobei unter Berücksichtigung der zuletzt bestimmten Position der mobilen Einheit durch die Umgebungssensoren erfassbare Marker und deren Position bezüglich der mobilen Einheit betreffenden Einstellungsdaten unter Verwendung des Kartendatensatzes ermittelt werden und zur Einschränkung der zur Detektion und Identifikation des wenigstens einen Markers auszuwertenden Sensordaten der Umgebungssensoren verwendet werden. Bei dem im Stand der Technik vorgestellten Verfahren ist es insbesondere nötig, zusätzliche Marker innerhalb des Umgebungsbereichs mit beschränkten Zugriff auf das globale Navigationssystem auszubilden, mittels welchem anstatt des globalen Navigationssatellitensystems die Position bestimmt wird. Des Weiteren kann im Stand der Technik eine Position über WLAN innerhalb des Umgebungsbereichs ermittelt werden. Somit kann im Stand der Technik zwar auf die Positionsinformation des globalen Navigationssatellitensystems verzichtet werden, jedoch sind aufwendige zusätzliche Marker beziehungsweise Gegenstände nötig, um eine Position im Umgebungsbereich erfassen zu können. Da diese Ausstattung mit Markern nicht auf jeden Umgebungsbereich zutrifft, ist das Verfahren insbesondere für den Alltag nicht tauglich.

Aufgabe der Erfindung ist es ein Verfahren, ein Fahrerassistenzsystem sowie ein Kraftfahrzeug zu schaffen, mittels welchen eine Positionsermittlung in einem Umgebungsbereich mit beschränkten Zugriff auf zumindest eine Positionsinformation eines globalen Navigationssatellitensystems zuverlässig ermöglicht ist.

Diese Aufgabe wird durch ein Verfahren, ein Fahrerassistenzsystem sowie ein Kraftfahrzeug gemäß den unabhängigen Ansprüchen gelöst.

Ein Aspekt der Erfindung betrifft ein Verfahren zum Betreiben eines Kraftfahrzeugs in zumindest einem semi-autonomen Fahrbetrieb in einem Umgebungsbereich des Kraftfahrzeugs. In dem Umgebungsbereich liegt zumindest beschränkter Zugriff auf zumindest eine Positionsinformation für das Kraftfahrzeug, die mit einem globalen Navigationssatellitensystems erfasst wird, vor. Es wird zumindest eine Positionsinformation des Kraftfahrzeugs außerhalb des Umgebungsbereichs mittels einer Erfassungseinrichtung des globalen Navigationssatellitensystems erfasst, wenn sich das Kraftfahrzeug außerhalb des Umgebungsbereichs befindet. Die zumindest eine Positionsinformation des Kraftfahrzeugs wird auf einem Speichermedium abgespeichert. Es wird zumindest ein fahrdynamischer Parameter des Kraftfahrzeugs mittels zumindest einer Erfassungseinrichtung des Kraftfahrzeugs erfasst. Die aktuelle Position des Kraftfahrzeugs im Umgebungsbereich wird abhängig von der zumindest einen abgespeicherten Positionsinformation des Kraftfahrzeugs außerhalb des Umgebungsbereichs und abhängig von dem zumindest einem erfassten fahrdynamischen Parameter bestimmt. Das Kraftfahrzeug wird im zumindest semi-autonomen Fahrbetrieb im Umgebungsbereich mit zumindest beschränkten Zugriff auf eine Positionsinformation des globalen Navigationssatellitensystems in Abhängigkeit der bestimmten aktuellen Position betrieben.

Insbesondere kann dadurch mittels Odometrie die aktuelle Position des Kraftfahrzeugs im Umgebungsbereich mit dem beschränkten Zugriff auf die zumindest eine Positionsinformation des Kraftfahrzeugs durchgeführt werden. Ein beschränkter Zugriff auf zumindest eine Positionsinformation bedeutet insbesondere, dass nicht genügend Informationen über die zumindest eine Position vorhanden sind, um eine zuverlässige insbesondere eine ausreichend genaue Positionsbestimmung durchzuführen. Außerhalb des Umgebungsbereichs dagegen ist ein "voller" Zugriff auf die zumindest eine Positionsinformation realisiert, so dass eine ausreichend genaue Positionsbestimmung mittels des globalen Navigationssatellitensystems realisiert ist, zumindest in dem Maße auf eine genaue Positionsinformation zugegriffen werden kann, dass diese für das Betreiben des Kraftfahrzeugs ausreichend genau und tauglich ist. Insbesondere kann dadurch als die zumindest eine Positionsinformation eine letzte Positionsinformation des globalen Navigationssatellitensystems genutzt werden und beispielsweise von dieser letzten Positionsinformation aus kann mittels des zumindest einen fahrdynamischen Parameters, insbesondere durch Odometrie, die aktuelle Position bestimmt werden. Insbesondere wird der zumindest eine fahrdynamische Parameter zumindest zu dem Zeitpunkt beziehungsweise Ort bestimmt, an dem ein "Übergang" des vollen Zugriffs auf die zumindest eine Positionsinformation auf den zumindest beschränkten Zugang wechselt. Insbesondere ist es dadurch ermöglicht, dass auch im Umgebungsbereich mit dem beschränkten Zugriff auf die zumindest eine Positionsinformation des Kraftfahrzeugs mit dem globalen Navigationssatellitensystems die aktuelle Position zuverlässig bestimmt werden kann ohne zusätzliche Marker oder Gegenstände im Umgebungsbereich. Insbesondere kann dadurch eine trainierte Trajektorie im Umgebungsbereich mit beschränkten Zugriff auf die zumindest eine Positionsinformation zuverlässig abgefahren werden, da insbesondere ein Startpunkt der Trajektorie zuverlässig aufgefunden werden kann, so dass ein zuverlässiger zumindest semi-autonomer Fahrbetrieb auch in diesem Umgebungsbereich realisiert werden kann.

Bei dem globalen Navigationssatellitensystem (GNSS- Global Navigation Stellite System) kann es sich insbesondere um ein GPS (Global Positioning System)-System oder beispielsweise um ein Galileo-System handeln. Da insbesondere in beispielsweise Parkhäusern als Umgebungsbereich auf eine Positionsinformation eines solchen Satellitensystems kein Zugriff herrscht, bricht der Kontakt zu dem globalen Navigationssatellitensystems meistens vor beziehungsweise bei Einfahrt in ein solches Parkhaus ab. Insbesondere wird dann zumindest eine Positionsinformation, beispielsweise die letzte Positionsinformation, des globalen Navigationssatellitensystems in dem Speichermedium, welches insbesondere im Kraftfahrzeug angeordnet sein kann, abgespeichert. Insbesondere kann dann mittels der Erfassungseinrichtung beispielsweise eine Längsbeschleunigung und/oder Querbeschleunigung des Kraftfahrzeugs als fahrdynamischer Parameter erfasst werden. Ebenfalls möglich ist, dass beispielsweise eine Geschwindigkeit des Kraftfahrzeugs erfasst wird beziehungsweise eine Drehgeschwindigkeit der Räder als der zumindest eine fahrdynamische Parameter erfasst wird. Ebenfalls möglich ist, dass ein Lenkwinkel beziehungsweise ein Radwinkel als fahrdynamischer Parameter erfasst wird. Eine weitere Möglichkeit des fahrdynamischen Parameters besteht darin, dass beispielsweise eine Neigung des Kraftfahrzeugs bestimmt wird, sodass insbesondere in einem Parkhaus auch Auffahrten beziehungsweise Rampen mit als fahrdynamische Parameter berücksichtigt werden können. Insbesondere können eine Vielzahl von fahrdynamischen Parametern genutzt werden, um die aktuelle Position des Kraftfahrzeugs zu bestimmen.

Insbesondere wird dann anhand der zumindest einen Positionsinformation, vorzugsweise der letzten Positionsinformation, welche mit dem globalen Navigationssatellitensystem erfasst wurde, und mittels dem zumindest einem fahrdynamischen Parameter eine Informationsfusion durchgeführt, sodass eine aktuelle Position des Kraftfahrzeugs im Umgebungsbereich ohne Zugriff auf das globalen Navigationssatellitensystem, zuverlässig bestimmt werden kann. Dadurch kann ein zumindest semi-autonomes Bewegen beispielsweise an ein vorgegebenes Ziel, beispielsweise einem Parkplatz oder einem Tunnelausgang, im Umgebungsbereich durchgeführt werden.

Insbesondere kann auch vorgesehen sein, dass eine Mehrzahl von Positionsinformationen, vorzugsweise von letzten Positionsinformationen, im Speichermedium abgespeichert wird. Es kann dadurch eine verbesserte Bestimmung der aktuellen Position durchgeführt werden, da ein vergangenes Bewegungsmuster des Kraftfahrzeugs durch die Mehrzahl von Positionsinformationen bestimmt werden kann und bei der Bestimmung der aktuellen Position mit berücksichtigt werden kann. Es ist ebenfalls möglich, dass auch der zumindest eine fahrdynamische Parameter bereits außerhalb des Umgebungsbereichs erfasst wird und im Bewegungsmuster mit berücksichtigt wird. Insbesondere findet die Bestimmung der aktuellen Position durch die Odometrie und eine Extrapolation der Fahrzeugposition statt. Insbesondere dient die aktuelle Position des Kraftfahrzeugs zur Bereichslokalisierung für ein trainiertes Parken in dem Umgebungsbereich. Insbesondere findet nach der Bereichslokalisierung eine genaue Lokalisierung mittels eines weiteren Lokalisierungsalgorithmus statt.

Gemäß einer vorteilhaften Ausgestaltungsform wird zumindest eine Trajektorie bestimmt, in welcher das Kraftfahrzeug im zumindest semi-autonomen Fahrbetrieb im Umgebungsbereich bewegt wird. Dadurch ist es ermöglicht, dass die aktuelle Position derart bestimmt wird, dass sie sich in der Nähe der Trajektorie befindet, sodass im Anschluss daran das Kraftfahrzeug im zumindest semi-autonomen Fahrbetrieb entlang dieser Trajektorie bewegt wird. Es kann somit die trainierte Trajektorie innerhalb des Umgebungsbereichs mit beschränkten Zugriff auf zumindest eine Positionsinformation des globalen Navigationssatellitensystems auch in diesem Umgebungsbereich zuverlässig durchgeführt werden. Beispielsweise kann die Trajektorie auf einen Parkplatz des Parkhauses als Endposition der Trajektorie führen, sodass nach Einfahrt in das Parkhaus beispielsweise das Kraftfahrzeug zumindest semi-autonom auf den jeweiligen Parkplatz mittels der trainierten Trajektorie, entlang dieser Trajektorie, bewegt wird.

Es hat sich weiterhin als vorteilhaft erwiesen, wenn die zumindest eine Trajektorie, entlang welcher das Kraftfahrzeug bewegt wird, in dem Speichermedium des Kraftfahrzeugs abgespeichert wird und/oder dass die abgespeicherte Positionsinformation und die bestimmte aktuelle Position mit bei einer zukünftigen Bestimmung der aktuellen Position berücksichtigt werden. Insbesondere kann durch das Abspeichern der Trajektorie, der Positionsinformation und der aktuellen Position in dem Speichermedium die Trajektorie mehrfach wiederholt aufgerufen werden. Insbesondere können diese abgespeicherten Informationen bei einer Wiederkehr des Kraftfahrzeugs an den gleichen Ort mit bei einer Bereichslokalisierung berücksichtigt werden, bevor ein weiterer Lokalisierungsalgorithmus verwendet wird. Somit kann bei einem mehrfachen Bewegen des Kraftfahrzeugs in dem Umgebungsbereich die Trajektorie aus dem Speichermedium abgerufen werden und entsprechend abgefahren werden. Dadurch lässt sich ein zuverlässiges und komfortables Fortbewegen, insbesondere ein Einparken des Kraftfahrzeugs, im Umgebungsbereich ermöglichen.

Es hat sich weiterhin als vorteilhaft erwiesen, wenn das Kraftfahrzeug abhängig von der aktuellen Position des Kraftfahrzeugs im Umgebungsbereich und abhängig von der abgespeicherten Trajektorie entlang der abgespeicherten Trajektorie bewegt wird. Insbesondere kann das Kraftfahrzeug von der aktuellen Position zu der Trajektorie zumindest semi-autonom bewegt werden, so dass eine zuverlässige Fortbewegung im Umgebungsbereich realisiert ist.

Ebenfalls vorteilhaft ist, wenn zum Fortbewegen im Umgebungsbereich eine zweite Trajektorie abgespeichert wird, entlang welcher das Kraftfahrzeug zumindest semi-autonom bewegt wird, wobei das Kraftfahrzeug entlang der zweiten Trajektorie bewegt wird, sobald mittels einer, insbesondere nochmals weiteren, Erfassungseinrichtung ein Objekt auf der zumindest einen Trajektorie erfasst wird, insbesondere das Objekt auf einem Parkplatz des Umgebungsbereichs erfasst wird. Mit anderen Worten, kann beispielsweise im Umgebungsbereich die abgespeicherte Trajektorie nicht abgefahren werden, weil beispielsweise ein geparktes Kraftfahrzeug auf der eigentlichen Endposition der Trajektorie bereits geparkt ist, so kann dann die zweite Trajektorie abgefahren werden, welche das Kraftfahrzeug beispielsweise auf einen weiteren Parkplatz führt. Insbesondere ist die zweite Trajektorie ebenfalls trainiert und abgespeichert. Es ist ebenfalls möglich, dass neben einer zweiten Trajektorie auch weitere Trajektorien innerhalb des Umgebungsbereichs bestimmt werden können und entsprechend im Speichermedium abgespeichert werden können. Ebenfalls möglich ist, dass für mehrere Umgebungsbereiche zumindest eine, insbesondere mehrere Trajektorien im Speichermedium abgespeichert werden können. Insbesondere ist es möglich, dass die unterschiedlichen Umgebungsbereiche auf Basis der zumindest einen Positionsinformation des globalen Navigationssatellitensystem des Kraftfahrzeugs entsprechend erkannt werden und auf Basis der zumindest einen Positionsinformation dann die entsprechenden Trajektorien im Umgebungsbereich selbständig, mit anderen Worten automatisiert, bestimmt werden können. Es ist dadurch ermöglicht, dass innerhalb des Umgebungsbereichs, insbesondere innerhalb mehrere Umgebungsbereiche, die Trajektorie zumindest semi-autonom abgefahren werden kann, und dadurch ein verbesserter und komfortabler Betrieb des Kraftfahrzeugs im Umgebungsbereich ermöglicht ist.

Es hat sich weiterhin als vorteilhaft erwiesen, wenn die zumindest eine Trajektorie in einer Trainingsphase derart bestimmt wird, dass bei einer Betätigung einer Betätigungseinrichtung durch einen Nutzer eine Startposition der zumindest einen Trajektorie erfasst wird und nach einem vorbestimmten Ereignis, insbesondere bei einem zweiten Betätigen der Betätigungseinrichtung, eine Endposition erfasst wird. Beispielsweise kann der Nutzer beim Einfahren in das Parkhaus die Betätigungseinrichtung betätigen und das Kraftfahrzeug durch den Fahrer zu der Endposition gefahren werden. Es kann dann in der Endposition durch das zweite Betätigen, beziehungsweise durch ein weiteres vorbestimmtes Ereignis, die Endposition zuverlässig bestimmt werden. Bei einem nächsten Einfahren in das Parkhaus kann dann das Kraftfahrzeug selbstständig die Trajektorie abfahren. Wenn die aktuelle Position in der Nähe der Startposition liegt, kann dann das Kraftfahrzeug automatisch die Trajektorie abfahren und sich automatisiert in die Endposition bewegen. Es ist dadurch ermöglicht, dass die Trajektorie von dem Nutzer trainiert wird und insbesondere mehrere Trajektorien durch den Nutzer im Umgebungsbereich trainiert und abgespeichert werden können. Es ist somit ein lernfähiges Fahrerassistenzsystem bereitgestellt, mittels welchen in einer Vielzahl von Umgebungsbereichen eine Vielzahl von Trajektorien abgefahren werden kann. Da insbesondere die Trajektorien oftmals in einem Umgebungsbereich mit beschränkten Zugriff auf das globalen Navigationssatellitensystem abgefahren werden, kann durch diese Möglichkeit auch innerhalb des Umgebungsbereich mit dem eingeschränkten Zugriff auf das globalen Navigationssatellitensystem die Trajektorien entsprechend zuverlässig bestimmt und abgefahren werden.

Gemäß einer weiteren vorteilhaften Ausgestaltungsform kann als Startposition der zumindest einen Trajektorie eine zur zumindest einen Positionsinformation des globalen Navigationssatellitensystems unterschiedliche Position erfasst werden, wobei die unterschiedliche Position im Umgebungsbereich bestimmt wird. Mit anderen Worten befindet sich die Startposition der Trajektorie innerhalb des Umgebungsbereichs, in welchem nicht auf die zumindest einen Positionsinformation des globalen Navigationssatellitensystems zurückgegriffen werden kann. Es ist dadurch ermöglicht, dass innerhalb einer Vielzahl von Umgebungsszenarien des Kraftfahrzeugs dennoch eine abgespeicherte Trajektorie zuverlässig abgefahren werden kann.

Es hat sich weiterhin als vorteilhaft erwiesen, wenn ein Abschalten einer Zündung des Kraftfahrzeugs oder ein Einlegen einer Parkbremse des Kraftfahrzeugs oder ein Öffnen einer Tür des Kraftfahrzeugs oder ein Abschließen des Kraftfahrtzeugs als vorbestimmtes Ereignis für das Erfassen der Endposition bestimmt wird. Insbesondere während des Trainierens der Trajektorie kann nach dem Betätigen der Betätigungseinrichtung durch den Nutzer der Beginn der Trajektorie bestimmt werden. Die Endposition kann dann derart bestimmt werden, sodass kein zusätzliches Zutun, beispielsweise ein zusätzliches Betätigen der Betätigungseinrichtung, notwendig ist, um die Endposition der Trajektorie zu bestimmen. Insbesondere kann durch die oben genannten Ereignisse, welche beim Parken des Kraftfahrzeugs automatisch durch den Nutzer durchgeführt werden, die Endposition bestimmt werden. Dadurch kann zuverlässig und komfortabel die Endposition für die Trajektorie bestimmt werden und für ein zukünftiges Abfahren der Trajektorie im zumindest semi-autonomen Fahrbetrieb genutzt werden.

Gemäß einer weiteren vorteilhaften Ausgestaltungsform kann das Kraftfahrzeug in einem vollautonomen Fahrbetrieb betrieben werden. Dadurch ist ein Fahrbetrieb des Kraftfahrzeugs realisiert, in welchen der Nutzer des Kraftfahrzeugs keine Handlungen vornehmen muss. Insbesondere kann das Kraftfahrzeug im vollautonomen Fahrbetrieb entlang der Trajektorie sich im Umgebungsbereich mit dem beschränkten Zugriff auf die zumindest eine Positionsinformation des globalen Navigationssatellitensystems voll autonom bewegen. Durch die zuverlässige Bestimmung der aktuellen Position ist somit ein zuverlässiger Betrieb im vollautonomen Fahrbetrieb des Kraftfahrzeugs realisiert.

Gemäß einer weiteren vorteilhaften Ausgestaltungsform kann zusätzlich mittels einer, insbesondere nochmals weiteren, Erfassungseinrichtung eine Umgebungsinformation des Umgebungsbereichs erfasst werden und die aktuelle Position zusätzlich abhängig von der Umgebungsinformation bestimmt werden. Es kann beispielsweise mittels Umgebungssensoren, beispielsweise Radarsensoren und/oder Ultraschallsensoren und/oder Lidarsensoren und/oder Kamerasensoren die Umgebung erfasst werden und aufgrund der Umgebungserkennung die aktuelle Position noch vorteilhafter bestimmt werden. Beispielsweise kann es sich dann bei der Erfassung der Umgebung um den zumindest einen weiteren Lokalisierungsalgorithmus, wie beispielsweise dem SLAM-Algorithmus handeln, um die genaue Position im Bezug insbesondere auf die gespeicherte Trajektorie zu bestimmen. Es kann dadurch noch vorteilhafter die aktuelle Position bestimmt werden, sodass ein noch zuverlässigerer Betrieb im Umgebungsbereich mit eingeschränkten Zugriff auf die zuminedst eine Positionsinformation durch das globale Navigationssatellitensystem realisiert werden kann.

Ebenfalls vorteilhaft ist, wenn mittels der Erfassungseinrichtung, insbesondere mittels der nochmals weiteren Erfassungseinrichtung, ein Parkplatz im Umgebungsbereich erfasst wird, und das Kraftfahrzeug auf den Parkplatz zumindest semi-autonom eingeparkt wird. Insbesondere kann es sich somit bei dem Fahrerassistenzsystem um ein Parkassistenzsystem handeln, welches es dem Kraftfahrzeug ermöglicht, semi-autonom in den erfassten Parkplatz im Umgebungsbereich mit eingeschränkten Zugriff auf die zumindest eine Positionsinformation des globalen Navigationssatellitensystems einzuparken. Insbesondere bei einem Parkmanöver ist eine genaue Position des Kraftfahrzeugs von entscheidender Bedeutung, um ohne eine Beeinträchtigung von anderen Verkehrsteilnehmern beziehungsweise Kraftfahrzeugen im Umgebungsbereich den Parkvorgang durchzuführen. Dadurch kann ein sehr zuverlässiges Parkassistenzsystem bereitgestellt werden.

Gemäß einer weiteren vorteilhaften Ausgestaltungsform kann das Kraftfahrzeug in einem Tunnel oder einem Parkhaus als Umgebungsbereich zumindest semi-autonom bewegt werden. Insbesondere kann dann als Endposition der Trajektorie der Tunnelausgang angesehen werden beziehungsweise in einem Parkhaus kann als Endposition die Parkzone angesehen werden. Es kann somit sowohl ein Tunnel als auch ein Parkhaus, in welchen insbesondere ein eingeschränkter Zugriff auf die zumindest eine Positionsinformation des globalen Navigationssatellitensystems herrscht, das Kraftfahrzeug dennoch zuverlässig zumindest semi-autonom bewegt werden. Es findet dann die Erkennung der aktuellen Position über Extrapolation aus der zumindest einen Positionsinformation des letzten Zugriffs auf das globale Navigationssatellitensystem und aus der Fusion mit den zumindest einem fahrdynamischen Parameter, insbesondere mittels Odometrie, statt.

Ebenfalls vorteilhaft ist, wenn als der zumindest eine fahrdynamische Parameter eine Längsbeschleunigung des Kraftfahrzeugs und/oder eine Querbeschleunigung des Kraftfahrzeugs und/oder eine Geschwindigkeit des Kraftfahrzeugs und/oder eine Neigung des Kraftfahrzeugs und/oder eine Drehgeschwindigkeit zumindest eines Rads des Kraftfahrzeugs und/oder ein Lenkwinkel des Kraftfahrzeugs und/oder ein Radwinkel des Kraftfahrzeugs erfasst wird. Dadurch können eine Vielzahl von fahrdynamischen Parametern erfasst werden, so dass die Position über Odometrie sehr genau bestimmt werden kann.

Ein weiterer Aspekt der Erfindung betrifft ein Fahrerassistenzsystem mit einer Steuerungseinrichtung, welche dazu ausgebildet ist ein Verfahren gemäß der Erfindung durchzuführen.

Ein nochmals weiterer Aspekt der Erfindung betrifft ein Kraftfahrzeug mit einem Fahrerassistenzsystem. Das Kraftfahrzeug ist insbesondere als Personenkraftwagen ausgebildet.

Vorteilhafte Ausgestaltungsformen des Verfahrens sind als vorteilhafte Ausgestaltungsformen des Fahrassistenzsystems sowie des Kraftfahrzeugs anzusehen. Das Fahrassistenzsystem und das Kraftfahrzeug weisen dazu gegenständliche Merkmale auf, die eine Durchführung des Verfahrens oder eine vorteilhafte Ausgestaltungsform davon ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug mit einem Fahrerassistenzsystem gemäß einer Ausführungsform der vorliegenden Erfindung; und
- Fig. 2: eine schematische Draufsicht auf ein Umgebungsszenario mit einem erfindungsgemäßen Kraftfahrzeug.

In den Figuren werden gleiche und funktionsgleiche Elemente mit den gleichen Bezugszeichen versehen.

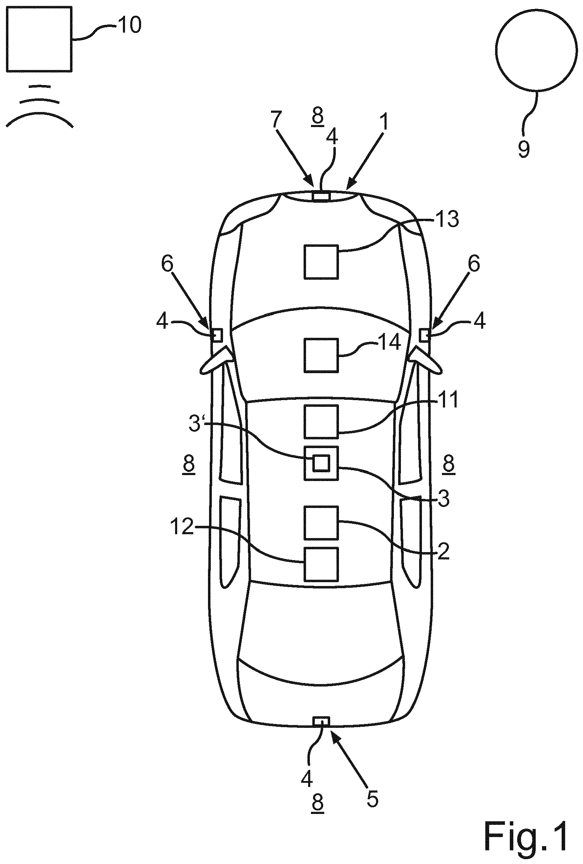

Fig. 1 zeigt ein Kraftfahrzeug 1 gemäß einer Ausführungsform der folgenden Erfindung in einer Draufsicht. Das Kraftfahrzeug 1 ist in dem vorliegenden Fall als Personenkraftwagen ausgebildet. Das Kraftfahrzeug 1 weist ein Fahrerassistenzsystem 2 auf. Das Fahrerassistenzsystem 2, welches beispielsweise als Parkassistenzsystem ausgebildet sein kann, weist wiederum eine Steuerungseinrichtung 2' auf, welche Informationen des Fahrerassistenzsystems 2 auswerten kann. Das Kraftfahrzeugs 1 weist eine erste Erfassungseinrichtung 3 auf, die beispielsweise zum Empfangen einer Position eines Positionsinformationssystems ausgebildet ist.

Am Kraftfahrzeug 1 sind Umgebungssensoren 4 angeordnet, welche dazu ausgebildet sind, eine Umgebung 8 des Kraftfahrzeugs 1 zu erfassen. Bei den Umgebungssensoren 4 kann es sich beispielsweise um Radarsensoren und/oder Ultraschallsensoren und/oder Lidarsensoren und/oder Kamerasensoren handeln. Die Umgebungssensoren 4 können bauartgleich ausgebildet sein. Es kann auch vorgesehen sein, dass beispielsweise ein Umgebungssensor 4 an einem Heckbereich 5 angeordnet ist und beispielsweise als Lidarsensor ausgebildet ist, während beispielsweise ein Umgebungssensor 4 als Radarsensor ausgebildet ist und in einem Frontbereich 7 des Kraftfahrzeugs 1 angeordnet ist, und beispielsweise zwei Umgebungssensoren 4 an einem Seitenbereich 6 des Kraftfahrzeugs angeordnet sind und diese Umgebungssensoren 4 als Ultraschallsensoren und/oder Kamerasensoren ausgebildet sind. Es können beispielsweise aber auch nur zwei Umgebungssensoren 4 oder drei Umgebungssensoren 4 oder auch mehr als vier Umgebungssensoren 4 vorgesehen sein. Die vorliegende Anordnung der Umgebungssensoren 4 und deren jeweilige Ausgestaltung sind rein beispielhaft zu sehen und keinesfalls als abschließend zu betrachten.

Mit den Umgebungssensoren 4 ist es insbesondere möglich ein Objekt 9 in der Umgebung 8 des Kraftfahrzeugs 1 zu erfassen.

Das Fahrerassistenzsystem 2 dient somit zum Unterstützen eines Fahrers des Kraftfahrzeugs 1 beim Führen des Kraftfahrzeugs 1. Insbesondere ist das Fahrerassistenzsystem 2 als ein Parkassistenzsystem oder ein sonstiges System ausgebildet.

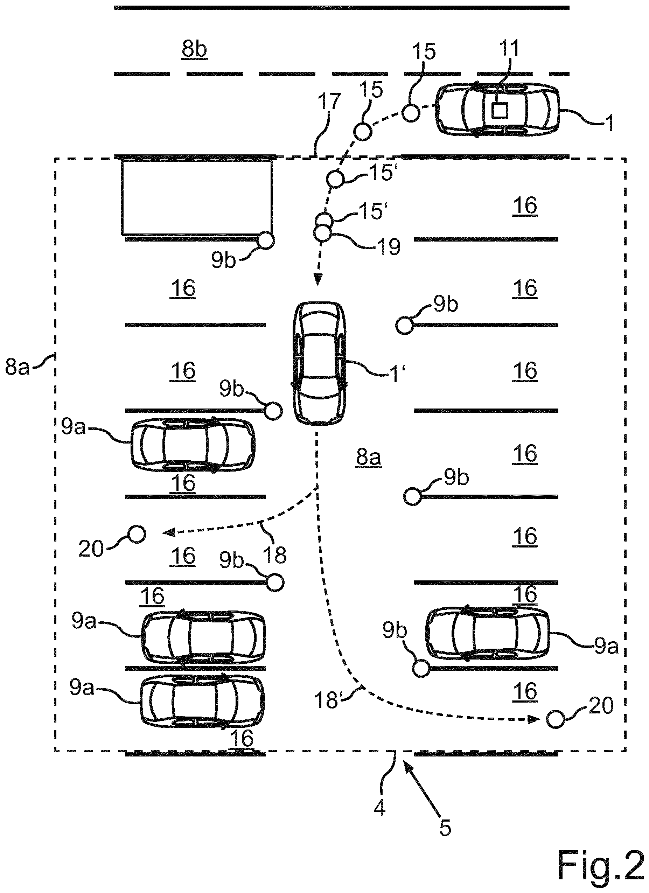

Die erste Erfassungseinrichtung 3 ist insbesondere dazu ausgebildet, von einem globalen Navigationssatellitensystem 10 (GNSS - Global Navigation Satellite System) eine Positionsinformation 15 (Fig. 2) des Kraftfahrzeugs zu empfangen. Ferner weist das Kraftfahrzeug 1 eine zweite Erfassungseinrichtung 11 auf, welche insbesondere dazu ausgebildet ist zumindest einen fahrdynamischen Parameter des Kraftfahrzeugs 1 zu erfassen. Beispielsweise kann als fahrdynamische Parameter eine Beschleunigung des Kraftfahrzeugs 1 beziehungsweise eine Geschwindigkeit des Kraftfahrzeugs 1 erfasst werden. Ebenfalls möglich ist, dass eine Neigung des Kraftfahrzeugs 1 bestimmt wird. Ferner kann als fahrdynamische Parameter auch eine Lenkwinkel und/oder eine Drehgeschwindigkeit der Räder des Kraftfahrzeugs erfasst werden. Mittels der zweiten Erfassungseinrichtung 11 können somit insbesondere Odometriedaten des Kraftfahrzeugs 1 erfasst werden.

Insbesondere weist das Kraftfahrzeug 1 eine dritte Erfassungseinrichtung 12 auf, welche die Informationen der Umgebungssensoren 4 auswertet. Ebenfalls ist es möglich, dass die erste Erfassungseinrichtung 3, die zweite Erfassungseinrichtung 11 und die dritte Erfassungseinrichtung 12 durch eine einzige Erfassungseinrichtung gebildet ist, welche dazu ausgebildet ist, sowohl die Positionsinformationen 15 des globalen Navigationssatellitensystems 10, den zumindest einen fahrdynamischen Parameter und die Informationen der Umgebungssensoren 4 zu erfassen und auszuwerten.

Es kann vorgesehen sein, dass das Kraftfahrzeug 1 ein Speichermedium 13 aufweist, welches insbesondere als dauerhafter Speicher ausgebildet ist. Das Speichermedium kann auch als kraftfahrzeugexternen Speicher, beispielsweise als Cloud, ausgebildet sein.

Ferner kann das Kraftfahrzeug 1 eine Betätigungseinrichtung 14 aufweisen, welche insbesondere durch den Fahrer des Kraftfahrzeugs 1 betätigt werden kann. Die Betätigungseinrichtung 14 dient insbesondere zur Aufnahme beziehungsweise Bestimmung einer Trajektorie 18, 18' (Fig. 2).

Fig. 2 zeigt das Kraftfahrzeug 1, 1' in einem Umgebungsszenario. Das Kraftfahrzeug 1, 1' bewegt sich vorliegend in einem Umgebungsbereich 8, welcher in den Umgebungsbereich 8a und dem Bereich 8b außerhalb des Umgebungsbereichs 8a eingeteilt ist. Das Kraftfahrzeug 1 befindet sich in Fig. 2 im Bereich 8b und das Kraftfahrzeug 1', welches das Kraftfahrzeug 1 in einer anderen Position darstellt, befindet sich im Umgebungsbereich 8a. Im Bereich 8b hat das Kraftfahrzeug 1 Zugriff auf die Positionsinformation 15 für das Kraftfahrzeug 1, 1', welche durch die erste Erfassungseinrichtung 3 mittels des globalen Navigationssatellitensystems 10 erfasst wird. Beispielsweise kann als Positionsinformation 15 ein GPS (Global Positioning System) - Signal oder eine Galileo - Signal erfasst werden. Im Umgebungsbereich 8a herrscht zumindest ein beschränkter, insbesondere kein, Zugriff auf die Positionsinformation 15 des globalen Navigationssatellitensystems. Das Kraftfahrzeugs 1, 1' erhält im Umgebungsbereich 8a somit keine Positionsinformation 15 von dem globalen Navigationssatellitensystem 10.

Bei dem Umgebungsbereich 8a kann sich beispielsweise um einen Tunnel oder um ein Parkhaus handeln. Im folgenden gezeigten Ausführungsbeispiel handelt es sich bei dem Umgebungsbereich 8a um einen Parkhaus mit einer Mehrzahl von Parkplätzen 16. In dem Umgebungsbereich 8a befinden sich eine Mehrzahl an Objekten 9, welche vorliegend durch weitere Kraftfahrzeuge 9a und/oder im folgenden Beispiel durch Säulen 9b dargestellt sind. Insbesondere ist vorgesehen, dass das Kraftfahrzeug 1, 1' die weiteren Kraftfahrzeuge 9a und die Säulen 9b nicht beeinträchtigen darf und somit um diese Objekte 9 manövrieren muss.

Bei dem erfindungsgemäßen Verfahren wird eine aktuelle Position 15' des Kraftfahrzeugs 1, 1' auch im Umgebungsbereich 8a zuverlässig bestimmt. Dazu wird die Positionsinformation 15 des Kraftfahrzeugs 1, 1' so lange erfasst, bis das Kraftfahrzeug 1, 1' aus dem Bereich 8b in den Umgebungsbereich 8a hinein fährt und keine Positionsinformation 15 durch das globale Navigationssatellitensystem 10 mehr erhält. Vorliegend kann dies beispielsweise der Fall sein, wenn das Kraftfahrzeug 1, 1' eine Einfahrt 17 des Umgebungsbereichs 8a, insbesondere des Parkhauses, passiert. Bei einem Tunnel als Umgebungsbereich könnte dies beispielsweise durch einen Tunneleingang des Tunnels bei Passieren des Tunneleingangs erfolgen. Im Speichermedium 13 wird die zumindest letzte bekannte Positionsinformation 15 des Kraftfahrzeugs 1, 1' abgespeichert. Insbesondere können auch mehrere letzte Positionsinformationen 15 innerhalb des Speichermediums 13 abgespeichert werden, so dass ein Bewegungsmuster des Kraftfahrzeugs 1, 1' durch mehrere Positionsinformationen 15 mit bei der Bestimmung der aktuellen Position 15' berücksichtigt werden kann. Mittels der zweiten Erfassungseinrichtung 11 des Kraftfahrzeugs 1, 1' werden dann im Umgebungsbereich 8a zumindest ein insbesondere mehrere fahrdynamische Parameter des Kraftfahrzeugs 1, 1' erfasst. Insbesondere kann dies nach dem Passieren der Einfahrt 17, mit anderen Worten wenn kein Zugriff mehr auf die Positionsinformation 15 realisiert ist, durchgeführt werden. Insbesondere kann dann abhängig von der der letzten Positionsinformation 15 und abhängig von den Odometriedaten der zweiten Erfassungseinrichtung 11 die aktuelle Position 15' des Kraftfahrzeugs 1, 1' im Umgebungsbereich 8a bestimmt werden.

Mittels der aktuellen Position 15' ist vorgesehen, dass das Kraftfahrzeug 1, 1' zumindest semi-autonom in dem Umgebungsbereich 8a betrieben wird. Insbesondere kann das Kraftfahrzeug 1, 1' entlang einer Trajektorie 18, 18' bewegt werden. Es ist vorgesehen, dass die Trajektorie 18, 18' ebenfalls im Speichermedium 13 des Kraftfahrzeugs 1 abgespeichert ist. Im vorliegenden Beispiel bewegt sich das Kraftfahrzeug 1, 1' auf der Trajektorie 18 zu einem der Parkplätze 16. Es ist vorgesehen, dass das Kraftfahrzeug 1, 1' abhängig von der aktuellen Position 15' des Kraftfahrzeugs 1, 1' im Umgebungsbereich 8a und abhängig von der abgespeicherten Trajektorie 18, 18' zumindest semi-autonom bewegt wird.

Insbesondere kann vorgesehen sein, dass zum Fortbewegen im Umgebungsbereich 8a eine zweite Trajektorie 18' im Speichermedium 13 abgespeichert wird, entlang welcher das Kraftfahrzeug 1, 1' zumindest semi-autonom bewegt wird. Das Kraftfahrzeug 1, 1' wird entlang der zweiten Trajektorie 18' bewegt, sobald mittels der dritten Erfassungseinrichtungen 12 ein Objekt 9 auf der zumindest einen Trajektorie 18 erfasst wird, insbesondere wenn das Objekt 9 auf dem Parkplatz 16 als weiteres Kraftfahrzeug 9a erfasst wird.

Die Trajektorien 18, 18' können in einer Trainingsphase derart bestimmt werden, dass bei Betätigung der Betätigungseinrichtung 14 durch den Nutzer, welcher insbesondere Fahrer des Kraftahrzeugs 1, 1' sein kann, eine Startposition 19 der Trajektorie 18, 18' erfasst wird und nach einem vorbestimmten Ereignis, welches beispielsweise eine zweite Betätigung der Betätigungseinrichtung 14 sein kann, eine Endposition 20 der Trajektorien 18, 18' bestimmt werden. Ebenfalls möglich ist, dass die Endpositionen 20 derart bestimmt werden, dass ein Abschalten einer Zündung des Kraftfahrzeugs 1, 1' oder ein Einlegen einer Parkbremse des Kraftfahrzeugs 1, 1' oder ein Öffnen einer Tür des Kraftfahrzeugs 1, 1' oder ein Abschließen des Kraftfahrzeugs 1, 1' als vorbestimmtes Ereignis für das Erfassen der Endposition 20 bestimmt wird. Beispielsweise kann in einem Tunnel die Endposition 20 durch einen Tunnelausgang des Tunnels bestimmt sein.

Insbesondere ist vorgesehen, dass die Startposition 19 der zumindest einen Trajektorie 18, 18' als eine zur Positionsinformation 15 des globalen Navigationssatellitensystems 10 unterschiedliche Position erfasst wird, wobei die unterschiedliche Position im Umgebungsbereich 8a bestimmt wird.

Insbesondere ist vorgesehen, dass das Kraftfahrzeug 1, 1' sich entlang der Trajektorien 18, 18' vollautonom bewegt.

Es ist ebenfalls vorgesehen, dass zusätzlich mittels der dritten Erfassungseinrichtung 12 Parkplätze 16 im Umgebungsbereich 8a erfasst werden und das Kraftfahrzeug 1, 1' auf einem der Parkplätze 16 zumindest semi-autonom eingeparkt wird.

## Patentansprüche

1. Verfahren zum Betreiben eines Kraftfahrzeugs (1, 1') in zumindest einem semi-autonomen Fahrbetrieb in einem Umgebungsbereich (8a) des Kraftfahrzeugs (1, 1'), in dem ein zumindest beschränkter Zugriff auf zumindest eine Positionsinformation (15) für das Kraftfahrzeug (1, 1'), die mit einem globalen Navigationssatellitensystems (10) erfasst wird, vorliegt, mit den Schritten:
- Erfassen zumindest einer Positionsinformation (15) des Kraftfahrzeugs (1, 1') außerhalb des Umgebungsbereichs (8a) mittels einer Erfassungseinrichtung (3, 11, 12) des globalen Navigationssatellitensystem (10), wenn sich das Kraftfahrzeug (1, 1') außerhalb des Umgebungsbereichs (8a) befindet;
- Speichern dieser außerhalb des Umgebungsbereichs (8a) erfassten Positionsinformation (15) des Kraftfahrzeugs (1, 1') auf einem Speichermedium (13);
- Erfassen von zumindest einem fahrdynamischen Parameter des Kraftfahrzeugs (1, 1') mittels zumindest einer Erfassungseinrichtung (3, 11, 12) des Kraftfahrzeugs (1, 1');
- Bestimmen der aktuellen Position (15') des Kraftfahrzeugs (1, 1') im Umgebungsbereich (8a) abhängig von der zumindest einen abgespeicherten Positionsinformation (15) des Kraftfahrzeugs (1, 1') außerhalb des Umgebungsbereichs (8a) und abhängig von dem zumindest einem erfassten fahrdynamischen Parameter; und
- Fortbewegen des Kraftfahrzeugs (1, 1') im zumindest semi-autonomen Fahrbetrieb im Umgebungsbereich (8a) mit zumindest beschränkten Zugriff auf die Positionsinformation (15) des globalen Navigationssatellitensystems (10) in Abhängigkeit der bestimmten aktuellen Position (15').

2. Verfahren nach einem der vorhergehenden Ansprüche,
**dadurch gekennzeichnet, dass**
zumindest eine Trajektorie (18, 18') bestimmt wird, entlang welcher das Kraftfahrzeug (1, 1') im zumindest semi-autonomen Fahrbetrieb im Umgebungsbereich (8a) bewegt wird.

3. Verfahren nach Anspruch 2,
**dadurch gekennzeichnet, dass**
die zumindest eine Trajektorie (18, 18'), entlang welcher das Kraftfahrzeug (1, 1') fortbewegt wird, in dem Speichermedium (13) des Kraftfahrzeugs (1, 1') abgespeichert wird und/oder dass die abgespeicherte Positionsinformation (15) und die bestimmte aktuelle Position (15') mit bei einer zukünftigen Bestimmung der aktuellen Position (15') berücksichtigt werden.

4. Verfahren nach Anspruch 3,
**dadurch gekennzeichnet, dass**
das Kraftfahrzeug (1, 1') abhängig von der aktuellen Position (15') des Kraftfahrzeugs (1, 1') im Umgebungsbereich (8a) und abhängig von der abgespeicherten Trajektorie (18, 18') entlang der abgespeicherten Trajektorie (18, 18') fortbewegt wird.

5. Verfahren nach Anspruch 3 oder 4,
**dadurch gekennzeichnet, dass**
zum Fortbewegen im Umgebungsbereich (8a) eine zweite Trajektorie (18') abgespeichert wird, entlang welcher das Kraftfahrzeugs (1, 1') zumindest semi-autonom bewegt wird, wobei das Kraftfahrzeug (1, 1') entlang der zweiten Trajektorie (18') bewegt wird, sobald mittels einer Erfassungseinrichtung (3, 11, 12) ein Objekt (9) auf der zumindest einen Trajektorie (18) erfasst wird, insbesondere das Objekt (9) auf einem Parkplatz (16) des Umgebungsbereichs (8a) erfasst wird.

6. Verfahren nach einem der Ansprüche 2 bis 5,
**dadurch gekennzeichnet, dass**
die zumindest eine Trajektorie (18, 18') in einer Trainingsphase derart bestimmt wird, dass bei einer Betätigung einer Betätigungseinrichtung (14) durch einen Nutzer eine Startposition (19) der zumindest einen Trajektorie (18, 18') erfasst wird und nach einem vorbestimmten Ereignis, insbesondere bei einer zweiten Betätigung der Betätigungseinrichtung (14), eine Endposition (20) erfasst wird.

7. Verfahren nach Anspruch 6,
**dadurch gekennzeichnet, dass**
als Startposition (19) der zumindest einen Trajektorie (18, 18') eine zur Positionsinformation (15) des Kraftfahrzeugs (1, 1') außerhalb des Umgebungsbereichs (8a) unterschiedliche Position erfasst wird, wobei die unterschiedliche Position im Umgebungsbereich (8a) bestimmt wird.

8. Verfahren nach Anspruch 6 oder 7,
**dadurch gekennzeichnet, dass**
ein Abschalten einer Zündung des Kraftfahrzeugs (1, 1') oder ein Einlegen einer Parkbremse des Kraftfahrzeugs (1, 1') oder ein Öffnen einer Tür des Kraftfahrzeugs (1, 1') oder ein Abschließen des Kraftfahrtzeugs (1, 1') als vorbestimmtes Ereignis für das Erfassen der Endposition (20) bestimmt wird.

9. Verfahren nach einem der vorhergehenden Ansprüche,
**dadurch gekennzeichnet, dass**
das Kraftfahrzeug (1, 1') insbesondere in einem vollautonomen Fahrbetrieb betrieben wird.

10. Verfahren nach einem der vorhergehenden Ansprüche,
**dadurch gekennzeichnet, dass**
zusätzlich mittels einer Erfassungseinrichtung (3, 11, 12) eine Umgebungsinformation des Umgebungsbereichs (8a) erfasst wird und die aktuelle Position (15') zusätzlich abhängig von der Umgebungsinformation bestimmt wird.

11. Verfahren nach einem der vorhergehenden Ansprüche,
**dadurch gekennzeichnet, dass**
mittels einer Erfassungseinrichtung (3, 11, 12) ein Parkplatz (16) im Umgebungsbereich (8a) erfasst wird und das Kraftfahrzeug (1, 1') auf den Parkplatz (16) zumindest semi-autonom eingeparkt wird.

12. Verfahren nach einem der vorhergehenden Ansprüche,
**dadurch gekennzeichnet, dass**
das Kraftfahrzeug (1, 1') in einem Tunnel oder einem Parkhaus als Umgebungsbereich (8a) zumindest semi-autonom bewegt wird.

13. Verfahren nach einem der vorhergehenden Ansprüche,
**dadurch gekennzeichnet, dass**
als der zumindest eine fahrdynamische Parameter eine Längsbeschleunigung des Kraftfahrzeugs (1, 1') und/oder eine Querbeschleunigung des Kraftfahrzeugs (1, 1') und/oder eine Geschwindigkeit des Kraftfahrzeugs (1, 1') und/oder eine Neigung des Kraftfahrzeugs (1, 1') und/oder eine Drehgeschwindigkeit zumindest eines Rads des Kraftfahrzeugs (1, 1') und/oder ein Lenkwinkel des Kraftfahrzeugs (1, 1') und/oder ein Radwinkel des Kraftfahrzeugs (1, 1') erfasst wird.

14. Fahrerassistenzsystem (2) mit einer Steuerungseinrichtung (2'), welche dazu ausgebildet ist, ein Verfahren nach einem der Ansprüche 1 bis 13 durchzuführen.

15. Kraftfahrzeug (1, 1') mit einem Fahrerassistenzsystem (2) nach Anspruch 14.
